# EUROPEAN PATENT SPECIFICATION

(11) **EP 2 535 175 B1**
(45) Date of publication and mention of the grant of the patent: **13.08.2014**
(21) Application number: 12166377.7
(22) Date of filing: 02.05.2012
(51) Int. Cl.: B29D 30/42

(54) **Apparatus for manufacturing tire ply material**
Vorrichtung zur Herstellung von Reifenlagen
Appareil de fabrication de nappes pour pneumatiques.

(30) Priority: 15.06.2011 JP 2011133512
(43) Date of publication of application: 19.12.2012
(73) Proprietor: SUMITOMO RUBBER INDUSTRIES LIMITED, Kobe-shi, Hyogo-ken (JP)
(72) Inventor: WATABE, Yasuhiro, Kobe-shi, Hyogo-ken, 651-0072 (JP); MITSUI, Koji, Kobe-shi, Hyogo-ken, 651-0072 (JP)
(74) Representative: Manitz, Finsterwald & Partner GbR

(56) References cited:
- DE-A1-102006 018 642
- US-A- 4 832 780
- US-A- 5 720 837
- US-A- 5 904 788
- US-A1- 2007 114 715

## Description

### Background of the invention

The present invention relates to an apparatus for manufacturing a tire ply material as numbers of cut pieces connected in series by connecting edges of the cut pieces, more particularly to an apparatus capable of connecting the edges accurately even if the edges are deformed randomly by curling. Some features of the independent claim are known from US 5720837 A. US 2007/0114715 A, US 4832780 A, US 5904788 A and DE 102006018642 A disclose other related technologies.

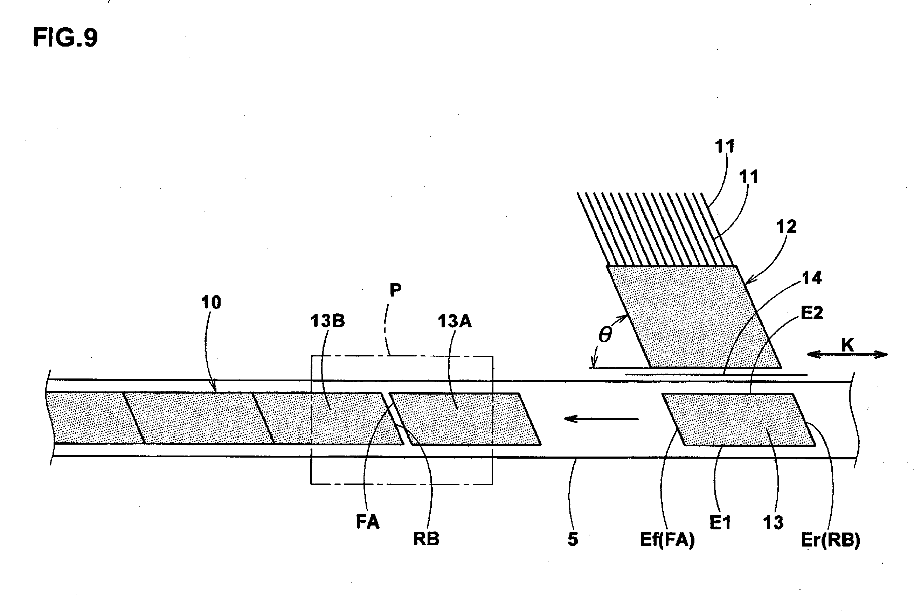

In general, a pneumatic tire is manufactured by wrapping raw tire ply materials around a tire building drum to form a carcass ply, a tread reinforcing belt ply and the like. As shown in Fig. 9, such raw tire ply material 10 is manufactured from a lengthy continuous strip 12 of rubberized parallel tire cords 11. The tire cords 11 in the strip 12 are laid side by side in the widthwise direction of the strip 12 and extend along the longitudinal direction of the strip 12. In order to make a raw tire ply material 10, the strip 12 is cut at predetermined intervals in the longitudinal direction of the strip 12 along a predetermined cutting direction K to form a plurality of cut pieces 13. For example, in the case of a carcass ply of a radial tire, the angle θ of the cutting direction K with respect to the longitudinal direction of the strip 12 (or the tire cords 11) is substantially 90 degrees, therefore, the shape of each cut piece is a rectangle. In the case of a belt ply (breaker ply), the angle θ is usually in a range of from 10 to 40 degrees, therefore, the shape of each cut piece is a parallelogram having acute angle corners.

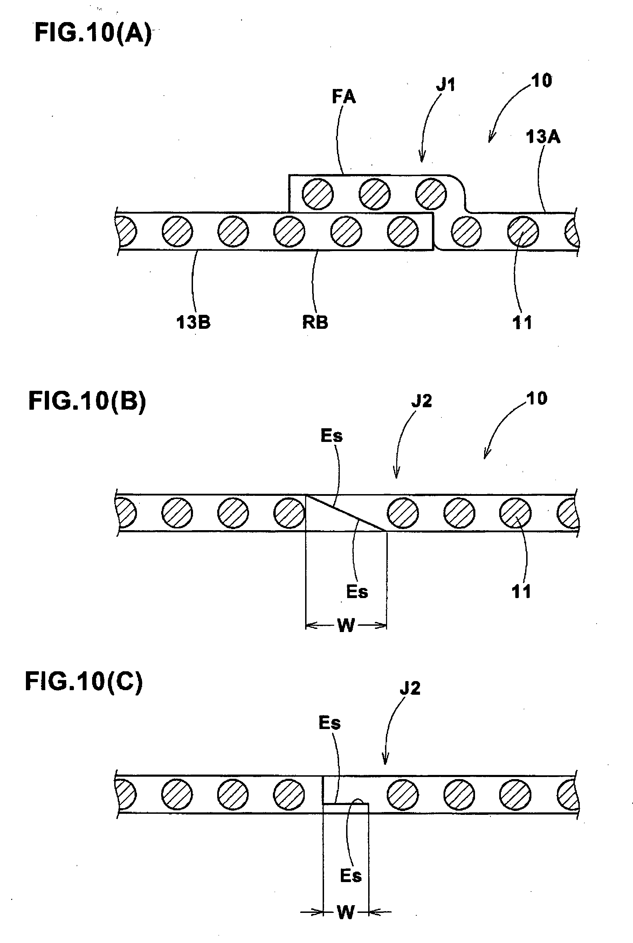

Then, the edges Ef and Er of the cut pieces 13, which edges are parallel with the tire cords 11 embedded therein, are connected as shown in Figs. 10(A), 10(B) and 10(C), and by repeating such operation, the cut pieces 13 are connected in series to form a lengthy continuous tire ply material 10 in which the tire cords 11 are inclined at the above-mentioned angle θ with respect to the longitudinal direction of the tire ply material 10.

Fig. 10(A) shows a conventional overlap joint, in which a rear edge portion RB of a going-ahead cut piece 13B and a front edge portion FA of a next cut piece 13A are overlap jointed. In this overlap joint method, a relatively thick overlap junction J1 is formed. This is not preferred in view of the uniformity. Therefore, so called "zipper joint", in which as shown in Fig. 10(B) (scarf joint) and Fig. 10(C) (half lap joint) the edges Es of the cut pieces 13 are connected with each other not to form a thick overlap junction therebetween, is preferred in recent years.

In the case of the zipper joint J2, as the bonded area or width W is relatively narrow, the joint operation requires high accuracy in butting the two edge surfaces Es. For that purpose, it is necessary that both ends of the rear edge of a cut piece are respectively positionally matched with both ends of the front edge of the next cut piece to be connected.

However, the end portions of such edges (namely, corners of the cut pieces) are liable to be deformed randomly by their curling due to, for example, untwisting of the tire cords 11 at the cut end, residual stress of the tire cords, residual stress of the rubber and the like.

Further, when the shape of the cut piece has acute angle corners like in the case of the tire ply material for the belt ply, such curling deformation is very liable to occur near the acute angle corners.

If such curling deformation occurs, the above-mentioned positional matching operation becomes difficult. Hitherto, therefore, manual correction of the deformation according to the condition of the deformation is necessitated before making the joint operation.

### Summary of the Invention

It is therefore, an object of the present invention to provide an apparatus as defined in claim 1, for manufacturing a tire ply material, in which even if curling deformation occurs, it is possible to connect the edges of the cut pieces each other with accuracy and thereby a nondefective uniform tire ply material can be manufactured with a high percent yield. A preferred embodiment of the invention is defined in claim 2.

According to the present invention, an apparatus for manufacturing a lengthy tire ply material as numbers of cut pieces connected in series in a conveyed direction by successively joining the rear edge of a going-ahead cut piece conveyed ahead and the front edge of a next cut piece, wherein the cut pieces are formed by cutting a lengthy continuous strip of rubberized parallel tire cords at predetermined intervals in the longitudinal direction of the strip along a predetermined cutting direction, wherein the tire cords in the strip are laid side by side in the widthwise direction of the strip and extend continuously along the longitudinal direction of the strip, whereby each cut piece has the cut edges as a first side edge and a second side edge and two edges parallel with the tire cords as a front edge and a rear edge in the conveyed direction,
the apparatus comprises
an image capture device for capturing
an image of the rear edge portion of the going-ahead cut piece an image of the front edge portion of the next cut piece and and outputting image data of the rear edge portion and image data of the front edge portion,
a position presuming device for presuming
the positions of the front edge and the rear edge by processing the above-mentioned image data of the front edge portion and the rear edge portion received from the image capture device, and outputting positional data of the front edge and the rear edge,
a holding and positioning device for holding and moving the next cut piece, according to the above-mentioned positional data, to a joint position at which the front edge of the next cut piece and the rear edge of the going-ahead cut piece can be exactly connected each other, wherein
the above-mentioned position presuming device extracts, from the image data of the rear edge portion of the going-ahead cut piece, a rear edge's straight part which is a straight part of the contour of the rear edge, a first side edge's straight part which is a straight part of the contour of the first side edge, and a second side edge's straight part which is a straight part of the contour of the second side edge,
and determines an intersecting point between an extended line of the rear edge's straight part and an extended line of the first side edge's straight part as a first vertex of the rear edge portion on the first-side-edge side, and
an intersecting point between the above-mentioned extended line of the rear edge's straight part and an extended line of the second side edge's straight part as a second vertex of the rear edge portion on the second-side-edge side,
further, the position presuming device extracts, from the image data of the front edge portion of the next cut piece, a front edge's straight part which is a straight part of the contour of the front edge, a first side edge's straight part which is a straight part of the contour of the first side edge, a second side edge's straight part which is a straight part of the contour of the second side edge,
and determines an intersecting point between an extended line of the front edge's straight part and an extended line of the first side edge's straight part as a first vertex of the front edge portion on the first-side-edge side, and
an intersecting point between the above-mentioned extended line of the front edge's straight part and an extended line of the second side edge's straight part as a second vertex of the front edge portion on the second-side-edge side,
the holding and positioning device moves the next cut piece to a joint position in which the first vertex and second vertex of the front edge portion of the next cut piece respectively coincide with the first vertex and second vertex of the rear edge portion of the going-ahead cut piece.

Therefore, even if the rear edge portion of the going-ahead cut piece and/or the front edge portion of the next cut piece are randomly-deformed by curling, it is possible to know the exact positions of the vertexes of the front edge portion and the rear edge portion when the curling deformation is corrected. Based on these exact positions of the vertexes, the holding and positioning device moves the next cut piece to the appropriate joint position. Therefore, the rear edge and front edge of the cut pieces can be connected each other with high accuracy, simultaneously correcting the deformation or as it is if there is no deformation. Thus, the lengthy tire ply material can be produced efficiently with high accuracy.

Preferably, the holding and positioning device comprises
a first robotic arm provided with a first hand for holding a first-side-edge side of the front edge portion and
a second robotic arm provided with a second hand for holding a second-side-edge side of the front edge portion, wherein
the first hand comprises
an attracting device for attracting a part of the front edge portion near the first vertex on the first-side-edge side,
a lifting device for moving the attracting device up and down so as to lift up the attracted part of the front edge portion, and
a clamp device for clamping the first-side-edge side of the front edge portion lifted, and
the second hand comprises
an attracting device for attracting a part of the front edge portion near the second vertex on the second-side-edge side,
a lifting device for moving the attracting device up and down so as to lift up the attracted part of the front edge portion, and
a clamp device for clamping the second-side-edge side of the front edge portion lifted.

### Brief Description of the Drawings

Fig. 1 is a plan view of an apparatus for manufacturing a tire ply material according to the present invention.
Fig. 2(A) is a schematic side view of an image capture device.
Fig. 2(B) is a plan view showing a shooting area of the image capture device.
Fig. 3 is a diagram for explaining a method carried out by the position presuming device.
Fig. 4(A) and Fig. 4(B) are a plan view and a cross sectional view, respectively, of a joint between the cut pieces.
Fig. 5 is a perspective view of the holding and positioning device.
Fig. 6 is a side view of the first hand from a direction (A) of Fig. 5.
Fig. 7 is a side view of the first hand from a direction (B) of Fig. 5.
Fig. 8(A) and Fig. 8(B) are cross sectional views of the separating device for explaining its function.
Fig. 9 is a schematic plan view showing an overall layout of the apparatus and also for explaining a general method for manufacturing a tire ply material.
Figs. 10(A), 10(B) and 10(C) are cross sectional views showing various methods of joining cut pieces (overlap joint, scarf joint and half lap joint).

### Description of the Preferred Embodiments

Embodiments of present invention will now be described in detail in conjunction with accompanying drawings.

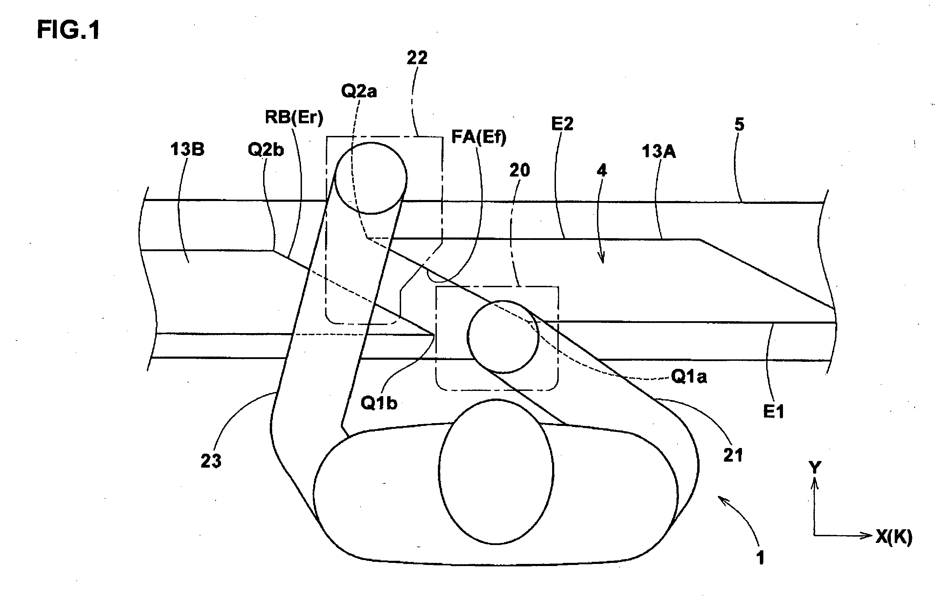

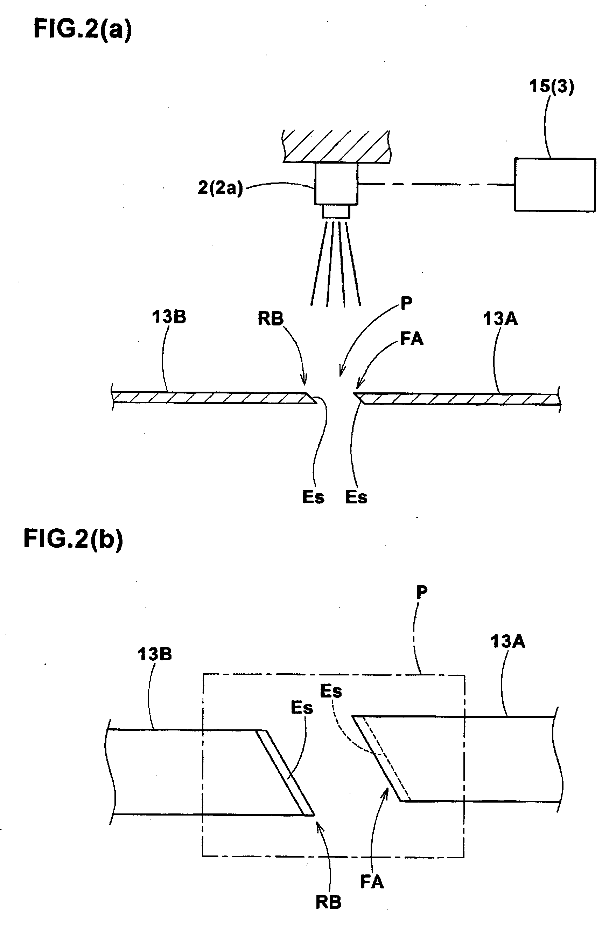

According to the present invention, an apparatus 1 for manufacturing a tire ply material 10 comprises an image capture device 2, a position presuming device 3, and a holding and positioning device 4, as shown in Figs. 1 and 2. In this embodiment, as shown in Fig. 9, the apparatus 1 further comprises a conveyer 5 such as belt conveyer, a cutting tool 14, and a strip supplying device for supplying a lengthy continuous strip 12.

The lengthy continuous strip 12 is a strip of parallel tire cords 11 rubberized with a raw rubber compound. The tire cords 11 in the strip 12 are laid side by side in the widthwise direction of the strip 12 and continuously extend along the longitudinal direction of the strip 12. According to the intended purpose of the tire ply material 10, various cords, e.g. metal cords such as steel cords, organic fiber cords and the like can be used as the tire cords 11.

The cutting tool 14 cut the strip 12 supplied by the strip supplying device, at predetermined intervals in the longitudinal direction of the strip 12 along a predetermined cutting direction K to form a plurality of cut pieces 13. For example, in the case of a carcass ply of a radial tire, the angle θ of the cutting direction K with respect to the longitudinal direction of the strip 12 (or the tire cords 11) is substantially 90 degrees, therefore, the shape of each cut piece is a rectangle. In the case of a belt ply (breaker ply), the angle θ is usually in a range of from 10 to 40 degrees, therefore, the shape of each cut piece is a parallelogram having acute angle corners.

Each cut piece 13 is placed on the conveyer 5 such that the edges of the cut piece 13 parallel with the tire cords 11 become the front edge Ef and rear edge Er in the conveying direction of the conveyer 5 and accordingly the cut edges of the cut piece 13 become the side edges E1 and E2.

Then, in a cut-piece-connecting zone P provided along the conveyer line, the rear edge Er of the cut piece 13B going ahead and the front edge Ef of the next cut piece 13A are connected as shown in Figs. 10(B) or 10(C).

By repeating such connecting operation in the cut-piece-connecting zone P, the cut pieces 13 are connected in series in the conveying direction, and a lengthy continuous tire ply material 10 is formed in which the tire cords 11 are inclined at the above-mentioned angle θ with respect to the longitudinal direction of the tire ply material 10.

In this embodiment, the tire ply material 10 is used as a steel breaker ply, therefore, the tire cords 11 are steel cords, and the angle θ is in a range of from 10 to 40 degrees. As shown in Fig. 2(A) and Fig. 10(B), the front edge surface Es and the rear edge surface Es of the cut pieces 13 are complementarily inclined to allow the zipper joint between the front edge portion FA and rear edge portion RB of the adjacent cut pieces 13.

The above-mentioned image capture device 2 comprises a camera 2a placed on the upper side of the above-mentioned cut-piece-connecting zone P as shown in Figs. 2(A) and 2(B).
When the cut pieces 13A and 13B conveyed are stopped in the cut-piece-connecting zone P, the image capture device 2 captures an image of the front edge portion FA of the cut piece 13A and the rear edge portion RB of the cut piece 13B, and outputs still image data of the front edge portion FA and still image data of the rear edge portion RB toward a computer 15.

In this embodiment, a single camera 2a is used to capture an image including both of the front edge portion FA and the rear edge portion RB. But, it is also possible to use two cameras 2a to capture an image of the front edge portion FA and an image of the rear edge portion RB, respectively. As to the camera 2a, for example, a CCD camera can be used.

The position presuming device 3 is embodied by the central processing unit of the computer 15.

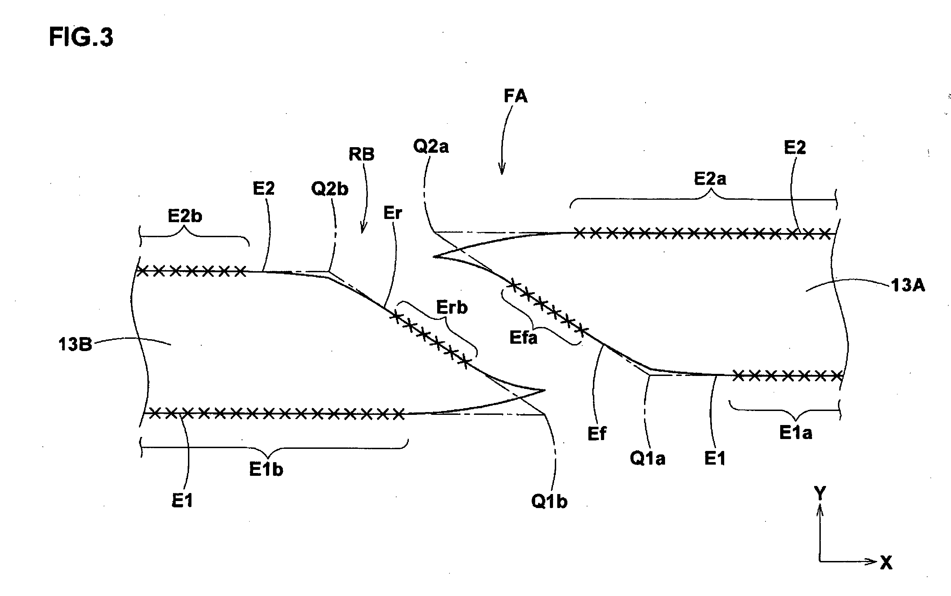

As shown in Fig. 3, the position presuming device 3 extracts the contour of the front edge portion FA of the cut piece 13A and the contour of the rear edge portion RB of the cut piece 13B from the image data of the front edge portion FA and the rear edge portion RB for example by making binarization of the image data. These contours are expressed in two-dimensional coordinate such as Cartesian coordinates based on the cutting direction K of the cut piece as X-axis and the widthwise direction of the cut piece as Y-axis.

From the contour of the front edge portion FA, the position presuming device 3 finds out a straight part Efa of the front edge Ef, a straight part E1a of the first side edge E1, and a straight part E2a of the second side edge E2.
Then, the position presuming device 3 determines
an intersecting point of an extended line of the straight part Efa and an extended line of the straight part E1a as the first vertex Q1a of the front edge portion FA on the first-side-edge-E1-side, and
an intersecting point of the extended line of the straight part Ffa and an extended line of the straight part E2a as the second vertex Q2a of the front edge portion FA on the second-side-edge-E2-side, and
the coordinates of these intersecting points are obtained and output toward the subsequent processing.

Similarly, from the contour of the rear edge portion RB, the position presuming device 3 finds out a straight part Erb of the rear edge Er, a straight part E1b of the first side edge E1, and a straight part E2b of the second side edge E2. Then, the position presuming device 3 determines
an intersecting point of an extended line of the straight part Erb and an extended line of the straight part E1b as the first vertex Q1b of the rear edge portion RB on the first-side-edge-E1-side, and
an intersecting point of the extended line of the straight part Frb and an extended line of the straight part E2b as the second vertex Q2b of the rear edge portion RB on the second-side-edge-E2-side, and
the coordinates of these intersecting points are obtained and output toward the subsequent processing.

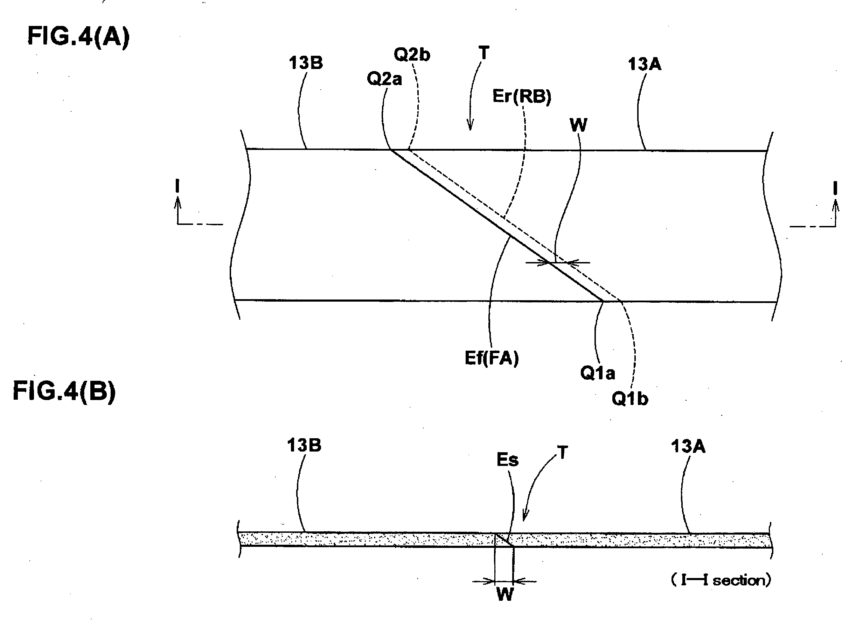

Next, the holding and positioning device 4 holds the front edge portion FA of the next cut piece 13A and moves it to the joint position T in which it is possible that the first vertex Q1a and second vertex Q2a of the front edge portion FA respectively coincide with the first vertex Q1b and second vertex Q2b of the rear edge portion RB.
More specifically, in the joint position T in this embodiment, as shown in Figs. 4(A) and 4(B), the edge surface Es of the front edge portion FA and the edge surface Es of the rear edge portion RB overlap each other by a specific width W, therefore, the presumed positions of the first vertex Q1a and the first vertex Q1b have to be shifted from each other in the x-axis direction by the amount corresponding to the width W, and also the presumed positions of the second vertex Q2a and the second vertex Q2b have to be shifted from each other in the x-axis direction by the amount corresponding to the width W.

In the case of the deformed front edge portion FA, the presumed positions of the first vertex Q1a and the second vertex Q2a in the front edge portion FA correspond to those of the front edge portion FA whose deformation is corrected in the joint position T.

Likewise, in the case of the deformed rear edge portion RB, the presumed positions of the first vertex Q1b and the second vertex Q2b in the rear edge portion RB correspond to those of the rear edge portion RB whose deformation is corrected in the joint position T.

If there is no deformation, the actual positions are the same as the presumed positions.

The curling deformation may be corrected by the use of a pressure roller. The edge surfaces Es inclined as shown in Fig. 4 can be connected each other by the use of a pressure roller. The rear edge portion RB of the going-ahead cut piece 13B and the front edge portion FA of the next cut piece 13A are already in the joint position T. Therefore, even if curling deformation exists, the edges of the cut pieces can be exactly connected with each other by pressing the joint portion by the use of a pressure roller or the like without manually correcting the deformation before the positioning.

In this embodiment, the holding and positioning device 4 comprises a pair of robotic arms 21 and 23 as shown in Fig. 1.

The robotic arms 21 and 23 are each three-dimensionally movable under control of the central processing unit of the computer 15. As the robotic arms 21 and 23, those known as the industrial robotic arms can be used.

The first robotic arm 21 is provided at its tip with a first hand 20 for holding a first-side-edge-E1-side part of the front edge portion FA.

The second robotic arm 23 is provided at its tip with a second hand 22 for holding a second-side-edge-E2-side part of the front edge portion FA.

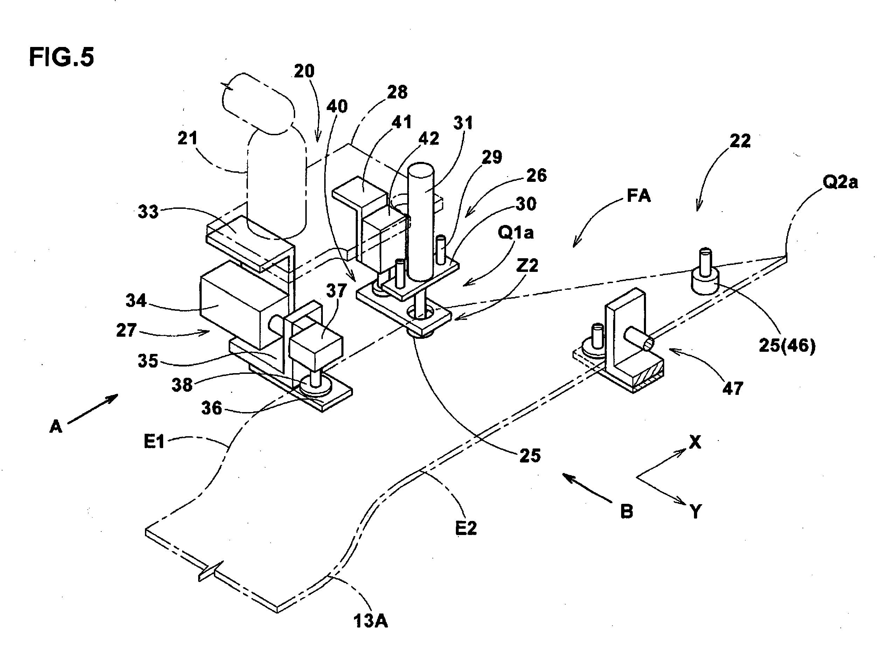

The first hand 20 comprises, as shown in Figs. 5 to 7, an attracting device 25 for attracting the cut piece, a lifting device 26 for moving the attracting device 25 up and down, and
a clamp device 27 for clamping the cut piece.

In this embodiment, the tire cords 11 are steel cords, therefore, a magnet such as permanent magnet or electrical magnet can be used as the attracting device 25. If the tire cords 11 are made of a nonmagnetic material, a vacuum pad, suction pad or the like can be used as the attracting device 25.

The lifting device 26 can move the attracting device 25 downward so that the attracting device 25 can attract a part of the front edge portion FA near the first vertex Q1a. Further, the lifting device 26 can move the attracting device 25 upward so that the attracted part of the front edge portion FA is lifted up from the conveyer 5.

The clamp device 27 can hold a first-side-edge-E1-side part of the front edge portion FA lifted.

The lifting device 26 and the clamp device 27 are mounted on a mounting frame 28 which is attached to the tip of the first robotic arm 21.

In this example, the lifting device 26 comprises a first cylinder 31 attached to the above-mentioned mounting frame 28 with its rod oriented downward by the use of a spacer sleeve 29 and a mounting plate 30 for example, and
the above-mentioned attracting device 25 is attached to the lower end of the rod. Accordingly, by the telescopic motion of the rod, the attracting device 25 is moved up and down.

By moving the attracting device 25 downward (step Z1), the attracting device 25 comes into contact with the cut piece 13A on the conveyer 5 and attracts the tire cords 11 (steel cords) embedded in the raw rubber near the first vertex Q1a. By moving the attracting device 25 upward (step Z2), the attracting device 25 lifts the first-side-edge-E1-side part of the front edge portion FA near of the first vertex Q1a from the conveyer 5.

The clamp device 27 in this example comprises
a second cylinder 34 attached sideways to the above-mentioned mounting frame 28 by the use of a mounting plate 33, and a moving frame 35 attached to the tip of the rod of the second cylinder 34. Accordingly, the moving frame 35 is movable in the Y-axis direction toward or away from the next cut piece 13A by the telescopic motion of the rod.

The moving frame 35 is provided with a receiving plate 36 protruding horizontally so that, when the moving frame 35 is moved toward the cut piece 13A, the receiving plate 36 is inserted on the under side of the lifted cut piece 13A and thereby it is possible to support the under surface of the first-side-edge-E1-side part of the front edge portion FA near the first vertex Q1a lifted by the attracting device 25.

Further, on the upper side of the receiving plate 36, a third cylinder 37 is mounted on the moving frame 35 with its rod oriented downward, and a pressure plate 38 is attached to the lower end of the rod of the third cylinder 37. Therefore, by the telescopic motion of the rod of the third cylinder 37, the pressure plate 38 moves toward or away from the upper surface of the receiving plate 36. Thus, it is possible to clamp the first-side-edge-E1-side part of the front edge portion FA between the pressure plate 38 and the receiving plate 36.

The second hand 22 has a substantially same construction as the first hand 20. The second hand 22 comprises an attracting device 25 for attracting the cut piece, a lifting device 46 for moving the attracting device 25 up and down, and
a clamp device 47 for clamping the cut piece.

The lifting device 46 can move the attracting device 25 downward so that the attracting device 25 can attract a part of the front edge portion FA near the second vertex Q2a. Further, the lifting device 46 can move the attracting device 25 upward so that the attracted part of the front edge portion FA can be lifted up from the conveyer 5.

The clamp device 47 can hold a second-side-edge-E2-side part of the front edge portion FA lifted.

The lifting device 46 and the clamp device 47 are mounted on a mounting frame 28 which is attached to the tip of the second robotic arm 23.

The lifting device 46 comprises a first cylinder 31 attached to the mounting frame 28 with its rod oriented downward, and the attracting device 25 is attached to the lower end of the rod.

By moving the attracting device 25 downward, the attracting device 25 comes into contact with the cut piece 13A on the conveyer and attracts the steel cords 11 embedded in the raw rubber near the second vertex Q2a.
By moving the attracting device 25 upward, the attracting device 25 lifts the second-side-edge-E2-side part of the front edge portion FA near of the second vertex Q2a from the conveyer 5.

The clamp device 47 comprises
a second cylinder 34 attached sideways to the mounting frame 28 by the use of a mounting plate 33, and
a moving frame 35 attached to the tip of the rod of the second cylinder 34. Accordingly, the moving frame 35 is movable in the Y-axis direction toward or away from the next cut piece 13A by the telescopic motion of the rod.

The moving frame 35 is provided with a receiving plate 36 protruding horizontally so that, when the moving frame 35 is moved toward the cut piece 13A, the receiving plate 36 is inserted on the under side of the lifted cut piece 13A and thereby it is possible to support the under surface of the second-side-edge-E2-side part of the front edge portion FA near the second vertex Q2a lifted by the attracting device 25.

Further, on the upper side of the receiving plate 36, a third cylinder 37 is mounted on the moving frame 35 with its rod oriented downward, and a pressure plate 38 is attached to the lower end of the rod of the third cylinder 37. Therefore, by the telescopic motion of the rod of the third cylinder 37, the pressure plate 38 moves toward or away from the upper surface of the receiving plate 36. Thus, it is possible to clamp the second-side-edge-E2-side part of the front edge portion FA between the pressure plate 38 and the receiving plate 36.

According to the presumed positions of the vertexes Q1a and Q2a computed by the computer 15, the computer 15 controls the first and second robotic arms 21 and 23 so that the attracting devices 25 of the first and second hands 20 and 22 are moved to the above-mentioned attracting parts of the front edge portion FA near the first vertex Q1a and the second vertex Q2a, respectively.
Then, the computer 15 controls the first and second hands 20 and 22 to lift the front edge portion FA of the next cut piece 13A from the conveyer 5 and to hold the front edge portion FA. Further, according to the presumed positions of the vertexes Q1a, Q1b, Q2a and Q2b computed by the computer 15, the computer 15 controls the first and second robotic arms 21 and 23 to move the front edge portion FA of the cut piece 13A to the joint position T. After moved to the joint position T, the attracting devices 25 are moved downward so that the front edge portion FA contacts with the conveyer. Then, the front edge portion FA and rear edge portion RB are connected with each other by pressing each other.

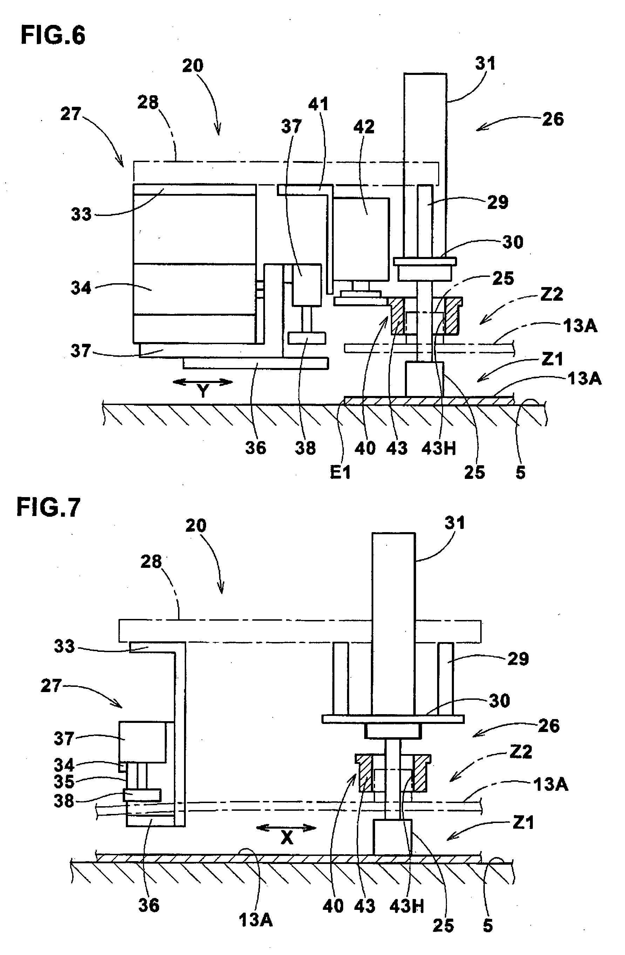

In this embodiment, a permanent magnet is used as the attracting device 25 of each of the first and second hands 20 and 22, therefore, each hand 20, 22 further comprises a separating device 40 for separating the attracting device 25 from the cut piece 13A.
As shown in Figs. 6 and 7, the separating device 40 comprises a fourth cylinder 42 mounted on the mounting frame 28 through a mounting plate 41 with its rod oriented downward, and a separation tool 43 attached to the lower end of the rod. Therefore, by the telescopic motion of the rod of the fourth cylinder 42, the separation tool 43 moves up and down.

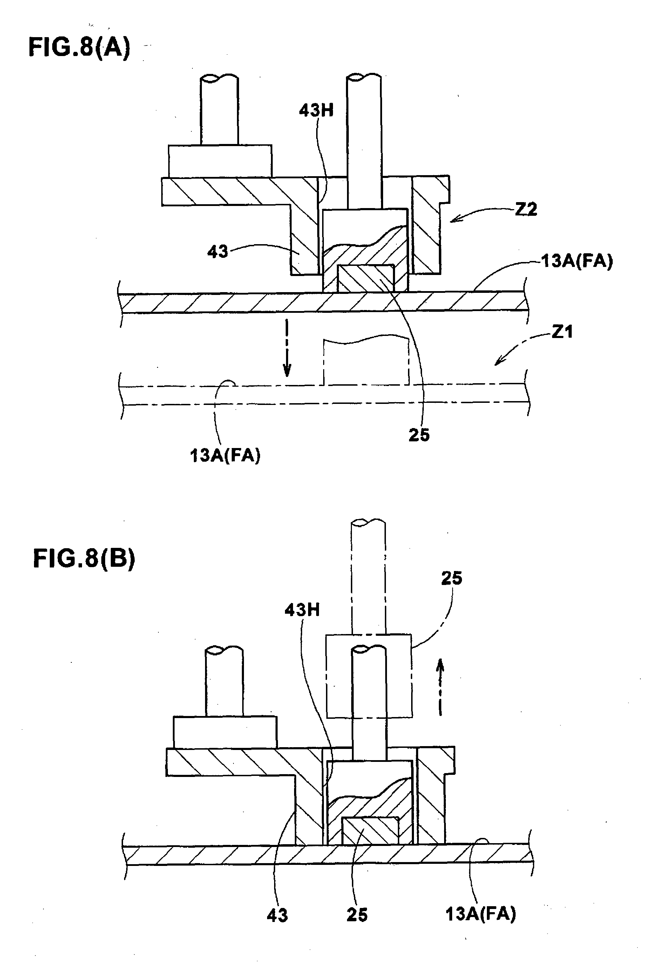

As shown in Fig. 8(A), the separation tool 43 is a tubular body having a through hole 43H which the attracting device 25 can pass through.

The separation tool 43 can move downward so that the lower end of the separation tool 43 goes beyond the under surface of the attracting device 25 moved to its lowest position for attracting the cur piece. The separation tool 43 can move upward so that the attracting device 25 protrudes from the lower end of the separation tool 43 and can attract the cut piece.

When the front edge portion FA and the rear edge portion RB are connected with each other by pressing each other the attracting device 25 is remained in contact with the cut piece. Thereafter, the separation tool 43 is moved downward as shown in Fig. 8(B) so that the separation tool 43 presses the upper surface of the front edge portion FA.

During the upper surface of the front edge portion FA is pressed (or secured) by both of the separation tool 43 and the attracting device 25, the clamp devices 27 and 47 release the cut piece and move away from the cut piece. Then during the separation tool 43 presses the upper surface of the front edge portion FA, the attracting device 25 is moved upward to separate its self from the cut piece 13A.

Thus, it is possible to prevent displacement of the cut piece 13A due to the separation of the attracting device 25 and the removing of the clamp devices 27 and 47.
Accordingly, even when a vacuum pad, suction pad or the like is used as the attracting device 25, it is preferable that the separating device 40 is provided as a pressing (or securing) device to prevent displacement of the cut piece 13A due to the removing of the clamp devices 27 and 47.

Then, the separation tool 43 is moved upward to release the cut piece 13A. And the connected cut pieces are conveyed forward and a next cut piece is supplied and again connected as explained above. By repeating such operations, a lengthy raw tire ply material 10 can be produced.

In the above-described embodiment, the connecting work for the front and rear edges is carried out on the belt conveyer 5. But, it is possible to carry out the connecting work on a working table covering the above-mentioned cut-piece-connecting zone P and disposed in a narrow space between two conveyers 5 arranged in line instead of the single conveyer 5. In this case, the expressions "on the conveyer", "from the conveyer", "with the conveyer" and the like in the foregoing description relating to the connecting work shall be deemed to be replaced with "on the working table", "from the working table", "with the working table" and the like.

Further, in the process for extracting the straight parts of the rear edge, front edge, first side edge and second side edge from the image data, if the length of the straight part is below a predetermined minimum length, then it may be possible that (1) the computer puts a halt to the process and warns the operator for manual correction, or (2) the computer gives a robotic arm (another or one of the foregoing two) or the like an order to apply a roller to the front edge portion and/or rear edge portion in order to correct an expected deformation and thereafter again extracts the straight parts.

While a preferred embodiment of the invention has been described using specific terms, such description is for illustrative purposes only, and it is to be understood that changes and variations may be made without departing from the spirit or scope of the following claims.

### Reference Signs List

- 1: apparatus for manufacturing tire ply material
- 2: image capture device
- 3: position presuming device
- 4: holding and positioning device
- 5: conveyer
- 10: tire ply material
- 11: tire cord
- 12: lengthy continuous strip
- 13, 13A, 13B: cut pieces
- 20: first hand
- 21: first robotic arm
- 22: second hand
- 23: second robotic arm
- 25: attracting device
- 26: lifting device
- 27: clamp device
- 46: lifting device
- 47: clamp device
- E1: first side edge
- E1a: straight part of first side edge
- E1b: straight part of first side edge
- E2: second side edge
- E2a: straight part of second side edge
- E2b: straight part of second side edge
- Ef: front edge of next cut piece
- Efa: straight part of front edge
- Er: rear edge of going-ahead cut piece
- Erb: straight part of rear edge
- FA: front edge portion of next cut piece
- RB: rear edge portion of going-ahead cut piece
- Q1a: first vertex of front edge portion
- Q2a: second vertex of front edge portion
- Q1b: first vertex of rear edge portion
- Q2b: second vertex of rear edge portion

## Claims

1. An apparatus (1) for manufacturing a lengthy tire ply material (10) as numbers of cut pieces (13) connected in series in a conveyed direction by successively joining the rear edge (Er) of a going-ahead cut piece (13B) conveyed ahead and the front edge (Ef) of a next cut piece (13A), wherein the cut pieces (13) are formed by cutting a lengthy continuous strip (12) of rubberized parallel tire cords (11) at predetermined intervals in the longitudinal direction of the strip (12) along a predetermined cutting direction, wherein the tire cords (11) in the strip (12) are laid side by side in the widthwise direction of the strip (12) and extend continuously along the longitudinal direction of the strip (12), whereby each cut piece (13) has the cut edges as a first side edge (E1) and a second side edge (E2) and two edges parallel with the tire cords (11) as a front edge (Ef) and a rear edge (Er) in the conveyed direction,
the apparatus (1) comprises:
an image capture device (2) for capturing an image of the rear edge portion (RB) of the going-ahead cut piece (13B), and an image of the front edge portion (FA) of the next cut piece (13A), and outputting image data of the rear edge portion (RB) and image data of the front edge portion (FA), the apparatus further comprising
a position presuming device (3) for presuming the positions of the front edge (Ef) and the rear edge (Er) by processing said image data of the front edge portion (FA) and the rear edge portion (RB) received from the image capture device (2), and outputting positional data of the front edge (Ef) and the rear edge (Er),
a holding and positioning device (4) for holding and moving the next cut piece (13A), according to said positional data, to a joint position (T) at which the front edge (Ef) of the next cut piece (13A) and the rear edge (Er) of the going-ahead cut piece (13B) can be exactly connected each other, wherein
said position presuming device (3) is configured to extract, from the image data of the rear edge portion (RB) of the going-ahead cut piece (13B), a rear edge's straight part (Erb) which is a straight part of the contour of the rear edge (Er), a first side edge's straight part (E1b) which is a straight part of the contour of the first side edge (E1), and a second side edge's straight part (E2b) which is a straight part of the contour of the second side edge (E2), and is configured to determine an intersecting point between an extended line of the rear edge's straight part (Erb) and an extended line of the first side edge's straight part (E1b) as a first vertex (Q1b) of the rear edge portion (RB) on the first-side-edge side, and an intersecting point between the above-mentioned extended line of the rear edge's straight part (Erb) and an extended line of the second side edge's straight part (E2b) as a second vertex (Q2b) of the rear edge portion (RB) on the second-side-edge side,
further, the position presuming device (3) is configured to extract, from the image data of the front edge portion (FA) of the next cut piece (13A), a front edge's straight part (Efa) which is a straight part of the contour of the front edge (Ef), a first side edge's straight part (E1a) which is a straight part of the contour of the first side edge (E1), a second side edge's straight part (E2a) which is a straight part of the contour of the second side edge (E2), and is configured to determine an intersecting point between an extended line of the front edge's straight part (Efa) and an extended line of the first side edge's straight part (E1a) as a first vertex (Q1a) of the front edge portion (FA) on the first-side-edge side, and an intersecting point between the above-mentioned extended line of the front edge's straight part (Efa) and an extended line of the second side edge's straight part (E2a) as a second vertex (Q2a) of the front edge portion (FA) on the second-side-edge side, and
the holding and positioning device (4) is configured to move the next cut piece (13A) to a joint position (T) in which the first vertex (Q1a) and second vertex (Q2a) of the front edge portion (FA) of the next cut piece (13A) respectively coincide with the first vertex (Q1b) and second vertex (Q2b) of the rear edge portion (RB) of the going-ahead cut piece (13B).

2. The apparatus (1) according to claim 1, wherein
said holding and positioning device (4) comprises
a first robotic arm (21) provided with a first hand (20) for holding a first-side-edge side of the front edge portion (FA) and
a second robotic arm (23) provided with a second hand (22) for holding a second-side-edge side of the front edge portion (FA), wherein
the first hand (20) comprises an attracting device (25) for attracting a part of the front edge portion (FA) near the first vertex (Q1a) on the first-side-edge side, a lifting device (26) for moving the attracting device (25) up and down so as to lift up the attracted part of the front edge portion (FA), and a clamp device (27) for clamping the first-side-edge side of the front edge portion (FA) lifted, and
the second hand (22) comprises an attracting device (25) for attracting a part of the front edge portion (FA) near the second vertex (Q2a) on the second-side-edge side, a lifting device (46) for moving the attracting device (25) up and down so as to lift up the attracted part of the front edge portion (FA), and a clamp device (47) for clamping the second-side-edge side of the front edge portion (FA) lifted.

## Patentansprüche

1. Vorrichtung (1) zum Herstellen eines langen Reifenlagenmaterials (10) als Anzahlen von Schnittstücken (13), die der Reihe nach in einer Förderrichtung verbunden sind, indem die Hinterkante (Er) eines vorausgehenden Schnittstücks (13B), das vorausgehend befördert wird, und die Vorderkante (Ef) eines nächsten Schnittstücks (13A) sukzessive zusammengefügt werden, wobei die Schnittstücke (13) gebildet sind, indem ein langer kontinuierlicher Streifen (12) aus gummierten parallelen Reifenkorden (11) in vorbestimmten Intervallen in der Längsrichtung des Streifens (12) entlang einer vorbestimmten Schnittrichtung geschnitten wird, wobei die Reifenkorde (11) in dem Streifen (12) nebeneinander in der Richtung der Breite des Streifens (12) gelegt sind und sich kontinuierlich entlang der Längsrichtung des Streifens (12) erstrecken, wodurch jedes Schnittstück (13) die Schnittkanten als eine erste Seitenkante (E1) und eine zweite Seitenkante (E2) und zwei Kanten parallel zu den Reifenkorden (11) als eine Vorderkante (Ef) und eine Hinterkante (Er) in der Förderrichtung aufweist,
wobei die Vorrichtung (1) umfasst:
eine Bilderfassungseinrichtung (2) zum Erfassen eines Bildes des Hinterkantenabschnitts (RB) des vorausgehenden Schnittstücks (13B) und eines Bildes des Vorderkantenabschnitts (FA) des nächsten Schnittstücks (13A), und zum Ausgeben von Bilddaten des Hinterkantenabschnitts (RB) und Bilddaten des Vorderkantenabschnitts (FA),
wobei die Vorrichtung ferner umfasst
eine Positionsannahmeeinrichtung (3) zum Annehmen der Positionen der Vorderkante (Ef) und der Hinterkante (Er), indem die Bilddaten des Vorderkantenabschnitts (FA) und des Hinterkantenabschnitts (RB), die von der Bilderfassungseinrichtung (2) empfangen werden, verarbeitet werden, und zum Ausgeben von Positionsdaten der Vorderkante (Ef) und der Hinterkante (Er),
eine Halte- und Positioniereinrichtung (4) zum Halten und Bewegen des nächsten Schnittstücks (13A) gemäß den Positionsdaten in eine Fügeposition (T), an der die Vorderkante (Ef) des nächsten Schnittstücks (13A) und die Hinterkante (Er) des vorausgehenden Schnittstücks (13B) exakt miteinander verbunden werden können, wobei
die Positionsannahmeeinrichtung (3) ausgestaltet ist, um aus den Bilddaten des Hinterkantenabschnitts (RB) des vorausgehenden Schnittstücks (13B) einen geraden Teil (Erb) der Hinterkante, der ein gerader Teil der Kontur der Hinterkante (Er) ist, einen geraden Teil (E1b) der ersten Seitenkante, der ein gerader Teil der Kontur der ersten Seitenkante (E1) ist, und einen geraden Teil (E2b) der zweiten Seitenkante, der ein gerader Teil der Kontur der zweiten Seitenkante (E2) ist, zu extrahieren, und ausgestaltet ist, um einen Schnittpunkt zwischen einer Verlängerungslinie des geraden Teils (Erb) der Hinterkante und einer Verlängerungslinie des geraden Teils der (E1b) der ersten Seitenkante als einen ersten Scheitel (Q1b) des Hinterkantenabschnitts (RB) auf der Seite der ersten Seitenkante und einen Schnittpunkt zwischen der oben erwähnten Verlängerungslinie des geraden Teils (Erb) der Hinterkante und einer Verlängerungslinie des geraden Teils (E2b) der zweiten Seitenkante als einen zweiten Scheitel (Q2b) des Hinterkantenabschnitts (RB) auf der Seite der zweiten Seitenkante zu ermitteln,
wobei die Positionsannahmeeinrichtung (3) ferner ausgestaltet ist, um aus den Bilddaten des Vorderkantenabschnitts (FA) des nächsten Schnittstücks (13A) einen geraden Teil (Efa) der Vorderkante, der ein gerader Teil der Kontur der Vorderkante (Ef) ist, einen geraden Teil (E1a) der ersten Seitenkante, der ein gerader Teil der Kontur der ersten Seitenkante (E1) ist, einen geraden Teil (E2a) der zweiten Seitenkante, der ein gerader Teil der Kontur der zweiten Seitenkante (E2) ist, zu extrahieren, und ausgestaltet ist, um einen Schnittpunkt zwischen einer Verlängerungslinie des geraden Teils (Efa) der Vorderkante und einer Verlängerungslinie des geraden Teils (E1a) der ersten Seitenkante als einen ersten Scheitel (Q1a) des Vorderkantenabschnitts (FA) auf der Seite der ersten Seitenkante, und einen Schnittpunkt zwischen der oben erwähnten Verlängerungslinie des geraden Teils (Efa) der Vorderkante und einer Verlängerungslinie des geraden Teils (E2a) der zweiten Seitenkante als einen zweiten Scheitel (Q2a) des Vorderkantenabschnitts (FA) auf der Seite der zweiten Seitenkante zu ermitteln, und
die Halte- und Positioniereinrichtung (4) ausgestaltet ist, um das nächste Schnittstück (13A) in eine Fügeposition (T) zu bewegen, in welcher der erste Scheitel (Q1a) und der zweite Scheitel (Q2a) des Vorderkantenabschnitts (FA) des nächsten Schnittstücks (13A) jeweils mit dem ersten Scheitel (Q1b) und dem zweiten Scheitel (Q2b) des Hinterkantenabschnitts (RB) des vorausgehenden Schnittstücks (13B) zusammenfallen.

2. Vorrichtung (1) nach Anspruch 1, wobei
die Halte- und Positioniereinrichtung (4) umfasst
einen ersten Roboterarm (21), der mit einer ersten Hand (20) zum Halten einer Seite der ersten Seitenkante des Vorderkantenabschnitts (FA) versehen ist, und
einen zweiten Roboterarm (23), der mit einer zweiten Hand (22) zum Halten einer Seite der zweiten Seitenkante des Vorderkantenabschnitts (FA) versehen ist, wobei
die erste Hand (20) eine Anzugseinrichtung (25) zum Anziehen eines Teils des Vorderkantenabschnitts (FA) nahe des ersten Scheitels (Q1a) auf der Seite der ersten Seitenkante, eine Hebeeinrichtung (26) zum Bewegen der Anzugseinrichtung (25) nach oben und nach unten, um den angezogenen Teil des Vorderkantenabschnitts (FA) anzuheben, und eine Klemmeinrichtung (27) zum Klemmen der Seite der ersten Seitenkante des angehobenen Vorderkantenabschnitts (FA) umfasst, und
die zweite Hand (22) eine Anzugseinrichtung (25) zum Anziehen eines Teils des Vorderkantenabschnitts (FA) nahe des zweiten Scheitels (Q2a) auf der Seite der zweiten Seitenkante, eine Hebeeinrichtung (46) zum Bewegen der Anzugseinrichtung (25) nach oben und nach unten, um den angezogenen Teil des Vorderkantenabschnitts (FA) anzuheben, und eine Klemmeinrichtung (47) zum Klemmen der Seite der zweiten Seitenkante des angehobenen Vorderkantenabschnitts (FA) umfasst.

## Revendications

1. Appareil (1) pour fabriquer un matériau pour pneumatique (10) en nappe allongée, sous forme d'un certain nombre de pièces découpées (13) connectées en série dans une direction de convoyage en réunissant successivement le bord arrière (Er) d'une pièce découpée en avant (13B) convoyée en avant et le bord avant (Ef) d'une pièce découpée suivante (11A), dans lequel les pièces découpées (13) sont formées en découpant un ruban continu allongé (12) de câblés de pneumatique parallèles caoutchoutés (11) à intervalles prédéterminés dans la direction longitudinale du ruban (12) le long d'une direction de coupe prédéterminée, dans lequel les câblés de pneumatique (11) dans le ruban (12) sont posés côte à côte dans la direction en largeur du ruban (12) et s'étendent en continu le long de la direction longitudinale du ruban (12), de sorte que chaque pièce découpée (13) présente les bords découpés comme un premier bord latéral (E1) et un second bord latéral (E2) et deux bords parallèles aux câblés de pneumatique (11) comme un bord avant (Ef) et un bord arrière (Er) dans la direction de convoyage,
l'appareil (2) comprenant :
un dispositif de capture d'images (2) pour capturer une image de la portion de bord arrière (RB) de la pièce découpée en avant (13B) et une image de la portion de bord avant (FA) de la pièce découpée suivante (13A), et pour sortir des données images de la portion de bord arrière (RB) et des données images de la portion de bord avant (FA),
l'appareil comprenant en outre
un dispositif de supposition de position (3) pour supposer les positions du bord avant (Ef) et du bord arrière (Er) en traitant lesdites données images de la portion de bord avant (FA) et de la portion de bord arrière (RB) reçues du dispositif de capture d'images (2), et pour sortir des données de position du bord avant (Ef) et du bord arrière (Er),
un dispositif de maintien et de positionnement (4) pour maintenir et déplacer la pièce découpée suivante (13A), en accord avec lesdites données de position, à une position de jonction (T) à laquelle le bord avant (Ef) de la pièce découpée suivante (13A) et le bord arrière (Er) de la pièce découpée en avant (13B) peuvent être exactement connectés l'un à l'autre, dans lequel
ledit dispositif de supposition de position (3) est configuré pour extraire, depuis les données images de la portion de bord arrière (RB) de la pièce découpée en avant (13B), une partie rectiligne du bord arrière (Erb) qui est une partie rectiligne du contour du bord arrière (Er), une partie rectiligne du premier bord latéral (E1b), qui est une partie rectiligne du contour du premier bord latéral (E1), et une partie rectiligne du second bord latéral (E2b), qui est une partie rectiligne du contour du second bord latéral (E2), et est configuré pour déterminer un point d'intersection entre une ligne qui prolonge la partie rectiligne du bord arrière (Erb) et une ligne qui prolonge la partie rectiligne du premier bord latéral (E1b) comme un premier sommet (Q1b) de la portion de bord arrière (RB) sur le côté du premier bord latéral, et un point d'intersection entre la ligne précitée qui prolonge la partie rectiligne du bord arrière (Erb) et une ligne qui prolonge la partie rectiligne du second bord latéral (E2b) comme un second sommet (Q2b) de la portion de bord arrière (RB) sur le côté du second bord latéral,
le dispositif de supposition de position (3) est en outre configuré pour extraire, depuis les données images de la portion de bord avant (FA) de la pièce découpée suivante (13A), une partie rectiligne du bord avant (Efa), qui est une partie rectiligne du contour du bord avant (Ef), une partie rectiligne du premier bord latéral (E1a), qui est une partie rectiligne du contour du premier bord latéral (E1), une partie rectiligne du second bord latéral (E2a), qui est une partie rectiligne du contour du second bord latéral (E2), et est configuré pour déterminer un point d'intersection entre une ligne qui prolonge la partie rectiligne du bord avant (Efa) et une ligne qui prolonge la partie rectiligne du premier bord latéral (E1a) comme un premier sommet (Q1a) de la portion de bord avant (FA) du côté du premier bord latéral, et un point d'intersection entre la ligne précitée qui prolonge la partie rectiligne du bord avant (Efa) et une ligne qui prolonge la partie rectiligne du second bord latéral (E2a) comme un second sommet (Q2a) de la partie de bord avant (FA) du côté du second bord latéral, et
le dispositif de maintien et de positionnement (4) est configuré pour déplacer la pièce découpée suivante (13A) à une position de jonction (T) dans laquelle le premier sommet (Q1a) et le second sommet (Q2a) de la portion de bord avant (FA) de la pièce découpée suivante (13A) coïncident respectivement avec le premier sommet (Q1b) et le second sommet (Q2b) de la portion de bord arrière (RB) de la pièce découpée en avant (13B).

2. Appareil (1) selon la revendication 1, dans lequel
ledit dispositif de maintien et de positionnement (4) comprend
un premier bras robotisé (21) doté d'une première main (20) pour maintenir un côté de la portion de bord avant (FA) vers le premier bord latéral, et
un second bras robotisé (23) doté d'une seconde main (22) pour maintenir un côté de la portion de bord avant (FA) vers le second bord latéral, dans lequel
la première main (20) comprend un dispositif d'attraction (25) pour attirer une partie de la portion de bord avant (FA) proche du premier sommet (Q1a) sur le côté du premier bord latéral, un dispositif de levage (26) pour déplacer le dispositif d'attraction (25) vers le haut et vers le bas de manière à soulever la partie attirée de la portion de bord avant (FA), et un dispositif de serrage (27) pour serrer le côté soulevé de la portion de bord avant (FA) vers le premier bord latéral, et
la seconde main (22) comprend un dispositif d'attraction (25) pour attirer une partie de la portion de bord avant (FA) proche du second sommet (Q2a) sur le côté du second bord latéral, un dispositif de levage (46) pour déplacer le dispositif d'attraction (25) vers le haut et vers le bas de manière à soulever la partie attirée de la portion de bord avant (FA), et un dispositif de serrage (47) pour serrer le côté soulevé de la portion de bord avant (FA) vers le second bord latéral.
